# EUROPÄISCHE PATENTSCHRIFT

(11) **EP 3 737 593 B1**
(45) Veröffentlichungstag und Bekanntmachung des Hinweises auf die Patenterteilung: **11.01.2023**
(21) Anmeldenummer: 18800902.1
(22) Anmeldetag: 08.11.2018
(51) Int. Cl.: B60S 1/52, B60S 1/38

(54) **WISCHBLATTVORRICHTUNG**
WIPER BLADE DEVICE
DISPOSITIF DE BALAI D'ESSUIE GLACE

(30) Priorität: 11.01.2018 DE 102018200316
(43) Veröffentlichungstag der Anmeldung: 18.11.2020
(73) Patentinhaber: Robert Bosch GmbH, 70442 Stuttgart (DE)
(72) Erfinder: RAPP, Harald, 77815 Buehl (DE); KRAEMER, Godelieve, 76549 Huegelsheim (DE)
(86) Internationale Anmeldenummer: PCT/EP2018/080559
(87) Internationale Veröffentlichungsnummer: WO 2019/137649

(56) Entgegenhaltungen:
- EP-A1- 2 415 645
- WO-A1-2007/000346
- DE-A1-102006 013 900
- DE-A1-102011 078 197

## Beschreibung

### Stand der Technik

Es ist bereits eine Wischblattvorrichtung für einen Scheibenwischer mit einer Spoilereinheit, die zumindest eine weiche Spoilerkomponente und zumindest eine harte Spoilerkomponente aufweist, wobei die harte Spoilerkomponente einen Aufnahmebereich für eine Federschiene zumindest teilweise ausbildet, und mit einer Sprüheinheit vorgeschlagen worden. EP 2 415 645 A1 offenbart eine ähnliche Wischblattvorrichtung.

WO 2007/000346 A1 offenbart eine Wischblattvorrichtung gemäß dem Oberbegriff des Anspruchs 1.

### Offenbarung der Erfindung

Die Erfindung geht aus von einer Wischblattvorrichtung für einen Scheibenwischer mit einer Spoilereinheit, die zumindest eine weiche Spoilerkomponente und zumindest eine harte Spoilerkomponente aufweist, wobei die harte Spoilerkomponente einen Aufnahmebereich für eine Federschiene zumindest teilweise ausbildet, und mit einer Sprüheinheit.

Es wird vorgeschlagen, dass die Sprüheinheit zumindest ein zumindest teilweise an die harte Spoilerkomponente angeformtes erstes Kanalelement aufweist.

Die Spoilereinheit ist vorzugsweise aus zumindest zwei verschiedenen Materialien, insbesondere aus zumindest zwei verschiedenen Kunststoffen, ausgebildet. Vorzugsweise ist die weiche Spoilerkomponente der Spoilereinheit aus einem ersten Material, insbesondere aus einem ersten Kunststoff, ausgebildet. Vorzugsweise ist die harte Spoilerkomponente der Spoilereinheit aus einem zweiten Material, insbesondere aus einem zweiten Kunststoff ausgebildet. Insbesondere ist das zweite Material härter, insbesondere verwindungssteifer, als das erste Material. Vorzugsweise ist die Spoilereinheit in einem Koextrusionsverfahren hergestellt, bei dem insbesondere das erste Material und das zweite Material zusammengeführt werden. Insbesondere sind die weiche Spoilerkomponente und die harte Spoilerkomponente stoffschlüssig miteinander verbunden, insbesondere einstückig ausgebildet. Die weiche Spoilerkomponente bildet vorzugsweise einen Spoilerfortsatz aus, der insbesondere dazu vorgesehen ist, infolge eines Fahrtwinds eine Anpresskraft zu erzeugen, die in Richtung einer zu wischenden Fläche, insbesondere einer Windschutzscheibe, ausgerichtet ist. Vorzugsweise kann die weiche Spoilerkomponente, insbesondere entlang einer Haupterstreckungsrichtung der Wischblattvorrichtung betrachtet, asymmetrisch ausgebildet sein. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt. Die weiche Spoilerkomponente ist vorzugsweise zu einer Generierung eines Anpressdrucks aus einem Fahrtwind vorgesehen. Der Aufnahmebereich für die Federschiene ist insbesondere als eine Ausnehmung in der harten Spoilerkomponente ausgebildet. Vorzugsweise weist der Aufnahmebereich einen polygonalen, insbesondere rechteckigen, Querschnitt auf. Vorzugsweise erstreckt sich der Aufnahmebereich zumindest im Wesentlichen entlang einer Gesamterstreckung der Wischblattvorrichtung entlang der Haupterstreckungsrichtung der Wischblattvorrichtung. Der Aufnahmebereich ist vorzugsweise zu einer zumindest teilweisen Aufnahme einer Wischleiste vorgesehen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Sprüheinheit, insbesondere das erste Kanalelement der Sprüheinheit, ist vorzugsweise zu einer Ausgabe und/oder Führung eines Reinigungsfluids, insbesondere eines Wischwassers, vorgesehen. Vorzugsweise weist die Sprüheinheit eine Vielzahl von ersten Kanalelementen auf. Die ersten Kanalelemente sind vorzugsweise entlang der Haupterstreckungsrichtung der Wischblattvorrichtung, insbesondere äquidistant zueinander, angeordnet. Vorzugsweise sind die ersten Kanalelemente als röhrenförmige Ausnehmungen ausgebildet. Insbesondere sind die ersten Kanalelemente teilweise innerhalb der harten Spoilerkomponente, bevorzugt vollständig innerhalb der harten Spoilerkomponente, angeordnet. Vorzugsweise sind zumindest Ausgabeöffnungen der ersten Kanalelemente vollständig innerhalb der harten Spoilerkomponente angeordnet.

Durch die erfindungsgemäße Ausgestaltung der Wischblattvorrichtung kann vorteilhaft eine Wischblattvorrichtung mit besonders formstabilen ersten Kanalelementen bereitgestellt werden. Vorteilhaft können die ersten Kanalelemente zumindest im Wesentlichen verschlussresistent, insbesondere verkalkungsresistent, ausgebildet werden. Vorteilhaft kann eine wartungsarme Wischblattvorrichtung bereitgestellt werden, welche eine besonders präzise Ausgabe eines Reinigungsfluids ermöglicht.

Des Weiteren wird vorgeschlagen, dass das zumindest teilweise angeformte erste Kanalelement zumindest teilweise ein Sprühdüsenelement der Sprüheinheit ausbildet. Vorzugsweise bilden alle zumindest teilweise angeformten ersten Kanalelemente zumindest teilweise Sprühdüsenelemente der Sprüheinheit aus. Vorzugsweise bilden die ersten Kanalelemente in einem Bereich der Ausgabeöffnungen der ersten Kanalelemente Sprühdüsenelemente aus. Vorzugsweise erfolgt eine Ausgabe des Reinigungsfluids durch die Sprühdüsenelemente ausbildenden ersten Kanalelemente unter einem Überdruck, welcher insbesondere höher ist als ein Umgebungsdruck einer die Wischblattvorrichtung umgebenden Umwelt. Insbesondere können die Sprühdüsenelemente derart ausgebildet sein, dass das Reinigungsfluid bei der Ausgabe aus den Sprühdüsenelementen zerstäubt wird. Vorteilhaft kann eine zielgerichtete und gleichzeitig großflächige Ausgabe des Reinigungsfluids erreicht werden.

Erfindungsgemäß weist das erste Kanalelement eine Haupterstreckungsrichtung zumindest im Wesentlichen parallel zu einer Vertikalerstreckungsrichtung der Spoilereinheit auf. Insbesondere weisen alle ersten Kanalelemente eine Haupterstreckungsrichtung zumindest im Wesentlichen parallel zu der Vertikalerstreckungsrichtung der Spoilereinheit auf. Die Vertikalerstreckungsrichtung der Spoilereinheit verläuft insbesondere zumindest im Wesentlichen senkrecht zu einer Haupterstreckungsebene des Aufnahmebereichs für die Federschiene. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Haupterstreckungsebene" eines Objekts soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Vorzugsweise verläuft die Haupterstreckungsrichtung der ersten Kanalelemente in einem an einer Kraftfahrzeugscheibe montierten Zustand der Wischblattvorrichtung zumindest im Wesentlichen senkrecht zu einer Oberfläche der Kraftfahrzeugscheibe. Vorteilhaft kann eine zumindest im Wesentlichen senkrechte Ausgabe des Reinigungsfluids auf die Kraftfahrzeugscheibe erreicht werden.

Weiterhin wird vorgeschlagen, dass das erste Kanalelement in einer Vertikalerstreckungsrichtung der Spoilereinheit zumindest teilweise überlappend zu dem Aufnahmebereich der Federschiene angeordnet ist. Vorzugsweise sind alle ersten Kanalelemente in der Vertikalerstreckungsrichtung der Spoilereinheit zumindest teilweise überlappend zu dem Aufnahmebereich der Federschiene angeordnet. Insbesondere weisen die ersten Kanalelemente eine Haupterstreckungsrichtung entlang einer Vertikalerstreckungsrichtung des Aufnahmebereichs auf. Die Vertikalerstreckungsrichtung des Aufnahmebereichs verläuft insbesondere zumindest im Wesentlichen parallel zu der Vertikalerstreckungsrichtung der Spoilereinheit. Vorzugsweise verläuft die Haupterstreckungsrichtung der ersten Kanalelemente zumindest im Wesentlichen parallel zu der Vertikalerstreckungsrichtung des Aufnahmebereichs. Vorteilhaft kann eine präzise Leitung des Reinigungsfluids durch die ersten Kanalelemente erreicht werden.

Zudem wird vorgeschlagen, dass das erste Kanalelement in einer Quererstreckungsrichtung der Spoilereinheit zu dem Aufnahmebereich der Federschiene zumindest teilweise versetzt angeordnet ist. Vorzugsweise sind alle ersten Kanalelemente in der Quererstreckungsrichtung der Spoilereinheit zu dem Aufnahmebereich der Federschiene zumindest teilweise versetzt angeordnet. Die Quererstreckungsrichtung der Spoilereinheit verläuft insbesondere zumindest im Wesentlichen senkrecht zu der Haupterstreckungsrichtung der Wischblattvorrichtung und insbesondere zumindest im Wesentlichen senkrecht zu der Vertikalerstreckungsrichtung der Spoilereinheit. Vorzugsweise sind die ersten Kanalelemente in der Quererstreckungsrichtung der Spoilereinheit zumindest teilweise durch die harte Spoilerkomponente von dem Aufnahmebereich getrennt. Insbesondere können die ersten Kanalelemente in der Quererstreckungsrichtung der Spoilereinheit vollständig durch die harte Spoilerkomponente von dem Aufnahmebereich getrennt sein. Alternativ ist denkbar, dass die ersten Kanalelemente in der Quererstreckungsrichtung der Spoilereinheit zumindest teilweise durch die weiche Spoilerkomponente von dem Aufnahmebereich getrennt sind. Vorteilhaft kann eine räumliche Trennung zwischen den ersten Kanalelementen und dem Aufnahmebereich erreicht werden. Die ersten Kanalelemente können vorteilhaft robust ausgebildet werden.

Des Weiteren wird vorgeschlagen, dass die weiche Spoilerkomponente zumindest einen Kanal der Sprüheinheit zumindest teilweise ausbildet, der direkt mit dem ersten Kanalelement verbunden ist. Vorzugsweise bildet die weiche Spoilerkomponente zumindest einen Kanal der Sprüheinheit zumindest teilweise aus, der direkt mit allen ersten Kanalelementen verbunden ist. Vorzugsweise verläuft der Kanal zumindest im Wesentlichen parallel zu der Haupterstreckungsrichtung der Wischblattvorrichtung. Vorzugsweise erstreckt sich der Kanal zumindest im Wesentlichen entlang einer Gesamterstreckung der Spoilereinheit entlang der Haupterstreckungsrichtung der Wischblattvorrichtung. Der Kanal ist insbesondere als eine, vorzugsweise schlauchförmige, Ausnehmung in der weichen Spoilerkomponente ausgebildet. Der Kanal ist vorzugsweise zu einer Durchleitung des Reinigungsfluids vorgesehen. Insbesondere kann das Reinigungsfluid, beispielsweise aus einer Reservoireinheit eines Kraftfahrzeugs o. dgl., durch den Kanal befördert, insbesondere gepumpt werden. Vorzugsweise weist der Kanal genau zwei Endstücke auf. Vorzugsweise ist der Kanal an einem ersten Endstück zumindest im Wesentlichen fluiddicht abgedichtet. Vorzugsweise ist der Kanal an einem zweiten Endstück mit einem Zuleitungselement, wie beispielsweise einem Schlauch, einem Rohr o. dgl., verbunden. Insbesondere wird dem Kanal durch das Zuleitungselement das Reinigungsfluid, beispielsweise aus der Reservoireinheit, zugeleitet. Vorzugsweise ist der Kanal entlang der Vertikalerstreckungsrichtung der Spoilereinheit betrachtet oberhalb der ersten Kanalelemente angeordnet. Vorzugsweise wird das unter einem, insbesondere im Vergleich zu einem Umgebungsdruck der die Wischblattvorrichtung umgebenden Umgebung, Überdruck stehende Reinigungsfluid aus dem Kanal in die ersten Kanalelemente gedrückt und durch die ersten Kanalelemente ausgegeben. Vorzugsweise sind die ersten Kanalelemente zumindest im Wesentlichen entlang des kompletten Kanals, insbesondere äquidistant zueinander, angeordnet. Vorteilhaft kann eine effiziente Zuleitung des Reinigungsfluids zu den ersten Kanalelementen ermöglicht werden.

Ferner wird vorgeschlagen, dass das erste Kanalelement von einer Wandung des Aufnahmebereichs der Federschiene begrenzt ist, wobei die Wandung auf einer dem Sprühdüsenelement abgewandten Seite der Wandung den Aufnahmebereich zumindest teilweise begrenzt. Vorzugsweise sind alle ersten Kanalelemente von der Wandung des Aufnahmebereichs der Federschiene begrenzt, wobei die Wandung auf der den Sprühdüsenelementen abgewandten Seite der Wandung den Aufnahmebereich zumindest teilweise begrenzt. Die Wandung begrenzt auf der den Sprühdüsenelementen abgewandten Seite der Wandung den Aufnahmebereich vorzugsweise entlang der Quererstreckungsrichtung der Spoilereinheit. Insbesondere können die ersten Kanalelemente zumindest teilweise, vorzugsweise entlang einer kompletten Vertikalerstreckung der ersten Kanalelemente, an die Wandung des Aufnahmebereichs angeformt sein. Die Vertikalerstreckung der ersten Kanalelemente ist insbesondere eine Erstreckung der ersten Kanalelemente entlang der Haupterstreckungsrichtung der ersten Kanalelemente. Es kann eine entlang der Quererstreckungsrichtung der Spoilereinheit vorteilhaft schmale und insbesondere aerodynamische Wischblattvorrichtung bereitgestellt werden.

Weiterhin wird vorgeschlagen, dass die Sprüheinheit zumindest ein zweites Kanalelement aufweist, welches auf einer dem ersten Kanalelement abgewandten Seite des Aufnahmebereichs angeordnet ist. Vorzugsweise weist die Sprüheinheit eine Vielzahl von zweiten Kanalelementen auf, welche auf der dem ersten Kanalelement abgewandten Seite des Aufnahmebereichs angeordnet sind. Insbesondere sind die zweiten Kanalelemente zumindest im Wesentlichen analog zu den ersten Kanalelementen ausgebildet. Die zweiten Kanalelemente sind vorzugsweise zu einer Ausgabe des Reinigungsfluids vorgesehen. Vorzugsweise umfasst die Sprüheinheit einen zweiten, insbesondere auf der den ersten Kanalelementen abgewandten Seite des Aufnahmebereichs angeordneten, Kanal. Vorzugsweise ist der zweite Kanal zumindest im Wesentlichen analog zu dem mit den ersten Kanalelementen verbundenen Kanal ausgebildet. Insbesondere ist der zweite Kanal direkt mit den zweiten Kanalelementen verbunden. Der zweite Kanal ist vorzugsweise zu einer Durchleitung des Reinigungsfluids vorgesehen. Vorzugsweise sind die zweiten Kanalelemente und der zweite Kanal zumindest im Wesentlichen spiegelsymmetrisch zu den ersten Kanalelementen und den mit den ersten Kanalelementen verbundenen Kanal um den Aufnahmebereich herum angeordnet. Vorteilhaft kann eine Reinigungsfluidausgabe auf zwei Seiten des Aufnahmebereichs, insbesondere gleichzeitig, erfolgen. Vorteilhaft kann in einem Betrieb der Wischblattvorrichtung in beiden Wischrichtungen die Reinigungsfluidausgabe räumlich vor einer Wischlippe eines Scheibenwischers erfolgen. Vorteilhaft kann eine besonders gründliche Reinigung einer Kraftfahrzeugscheibe erreicht werden.

Zudem geht die Erfindung aus von einem Wischblatt mit einer erfindungsgemäßen Wischblattvorrichtung. Vorzugsweise umfasst das Wischblatt weitere, insbesondere für einen Betrieb des Wischblatts nötige, Bauteile. Insbesondere umfasst das Wischblatt die, insbesondere in den Aufnahmebereich eingeschobene, Federschiene. Vorzugsweise ist die Federschiene zumindest teilweise aus einem Federstahl ausgebildet. Vorzugsweise weist die Federschiene in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Kraftfahrzeugscheibe, über welche die Federschiene in wenigstens einem Betriebszustand geführt wird. Unter einer "Erstreckung" eines Elements soll insbesondere ein maximaler Abstand zweier Punkte einer senkrechten Projektion des Elements auf eine Ebene verstanden werden. Insbesondere umfasst das Wischblatt eine, insbesondere zumindest teilweise in den Aufnahmebereich eingeschobene, Wischleiste. Unter einer "Wischleiste" soll insbesondere eine Einheit aus einem elastischen Material mit einer Wischlippe verstanden werden, die dazu vorgesehen ist, zu einer Reinigung einer zu reinigenden Fläche, insbesondere einer Scheibenfläche, vorzugsweise einer Fahrzeugscheibe, in einem Kontakt über die zu reinigende Fläche bewegt zu werden. Bevorzugt ist die Wischleiste aus einem natürlichen oder künstlichen Elastomer, insbesondere aus Gummi, hergestellt. Vorteilhaft kann ein wartungsarmes Wischblatt bereitgestellt werden, welches eine besonders präzise Ausgabe eines Reinigungsfluids ermöglicht.

Des Weiteren geht die Erfindung aus von einem Scheibenwischer mit einem erfindungsgemäßen Wischblatt. Vorzugsweise umfasst der Scheibenwischer weitere, insbesondere für einen Betrieb des Scheibenwischers benötigte, Bauteile. Insbesondere umfasst der Scheibenwischer eine Adaptereinheit zu einer Montage des Wischblatts an einer Scheibenwischerantriebseinheit eines Kraftfahrzeugs. Vorteilhaft kann ein Scheibenwischer mit einer integrierten Reinigungsfluidausgabefunktion bereitgestellt werden.

Die erfindungsgemäße Wischblattvorrichtung, das erfindungsgemäße Wischblatt, die erfindungsgemäße Spoilereinheit, die erfindungsgemäße Sprüheinheit und/oder der erfindungsgemäße Scheibenwischer sollen/soll hierbei nicht auf die oben beschriebene Anwendung und Ausführungsform beschränkt sein. Insbesondere können/kann die erfindungsgemäße Spoilereinheit, die erfindungsgemäße Sprüheinheit und/oder der erfindungsgemäße Scheibenwischer zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Scheibenwischer in einer perspektivischen Darstellung,
- Fig. 2: eine erfindungsgemäße Wischblattvorrichtung in einer schematischen Schnittdarstellung,
- Fig. 3: einen Teil einer alternativen Wischblattvorrichtung in einer schematischen Schnittdarstellung und
- Fig. 4: einen Teil einer weiteren alternativen Wischblattvorrichtung in einer schematischen Schnittdarstellung.

### Beschreibung der Ausführungsbeispiele

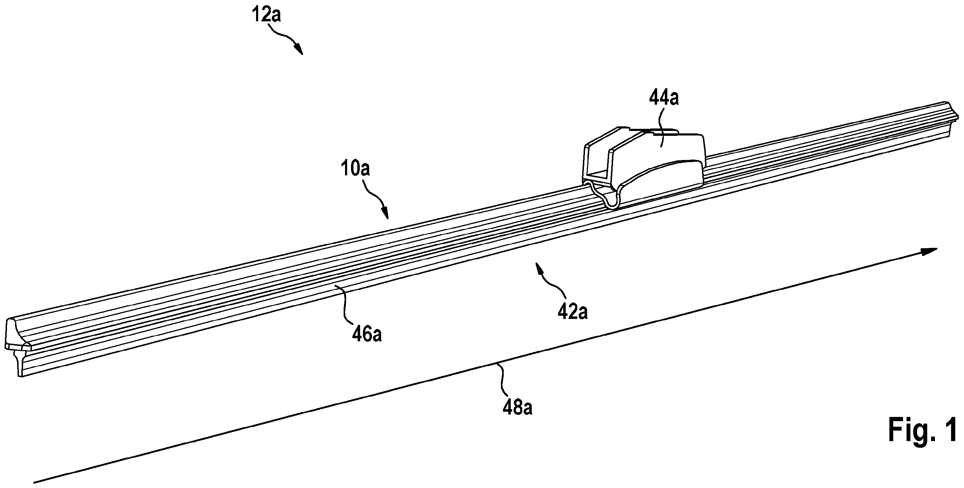

Figur 1 zeigt einen Scheibenwischer 12a in einer perspektivischen Darstellung. Der Scheibenwischer 12a umfasst ein Wischblatt 42a. Der Scheibenwischer 12a umfasst eine Adaptereinheit 44a zu einer Montage des Wischblatts 42a an einer Scheibenwischerantriebseinheit eines Kraftfahrzeugs. Das Wischblatt 42a weist eine Wischblattvorrichtung 10a auf. Das Wischblatt 42a weist eine nicht weiter dargestellte Federschiene auf. Das Wischblatt 42a weist eine Wischleiste 46a auf. Die Federschiene und ein Teil der Wischleiste 46a sind in einen nicht weiter dargestellten Aufnahmebereich 20a der Wischblattvorrichtung 10a eingeschoben.

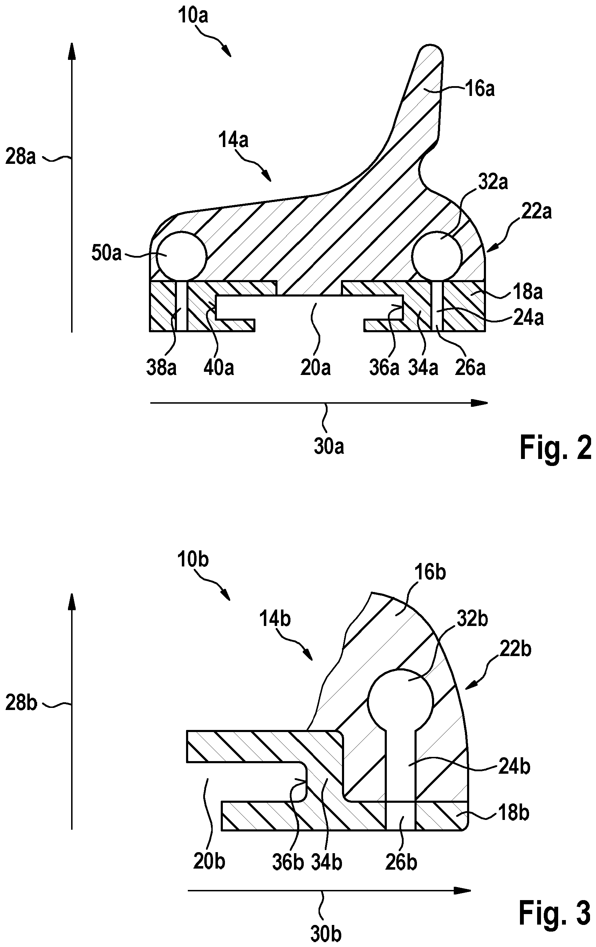

Figur 2 zeigt die Wischblattvorrichtung 10a für den Scheibenwischer 12a in einer schematischen Schnittdarstellung. Eine dargestellte Schnittebene liegt senkrecht zu einer Haupterstreckungsrichtung 48a der Wischblattvorrichtung 10a (vgl. Figur 1). Die Wischblattvorrichtung 10a umfasst eine Spoilereinheit 14a. Die Spoilereinheit 14a weist eine weiche Spoilerkomponente 16a und eine harte Spoilerkomponente 18a auf. Die weiche Spoilerkomponente 16a ist entlang einer Vertikalerstreckungsrichtung 28a der Spoilereinheit 14a betrachtet oberhalb der harten Spoilerkomponente 18a angeordnet. Die weiche Spoilerkomponente 16a und die harte Spoilerkomponente 18a sind aus unterschiedlichen Kunststoffen hergestellt. Die unterschiedlichen Kunststoffe sind in einem Koextrusionsverfahren zusammengeführt. Die weiche Spoilerkomponente 16a und die harte Spoilerkomponente 18a sind einstückig ausgebildet. Die harte Spoilerkomponente 18a bildet teilweise den Aufnahmebereich 20a für die Federschiene aus. Der Aufnahmebereich 20a ist als eine Ausnehmung in der harten Spoilerkomponente 18a ausgebildet. Der Aufnahmebereich 20a weist einen rechteckigen Querschnitt auf. Der Aufnahmebereich 20a erstreckt sich entlang der kompletten Haupterstreckungsrichtung 48a der Wischblattvorrichtung 10a. Die weiche Spoilerkomponente 16a bildet einen Spoilerfortsatz aus. Die weiche Spoilerkomponente 16a ist entlang der Haupterstreckungsrichtung 48a der Wischblattvorrichtung 10a betrachtet asymmetrisch ausgebildet. Die weiche Spoilerkomponente 16a ist zu einer Generierung eines Anpressdrucks aus einem Fahrtwind vorgesehen.

Die Wischblattvorrichtung 10a weist eine Sprüheinheit 22a auf. Die Sprüheinheit 22a umfasst ein erstes Kanalelement 24a. Das erste Kanalelement 24a ist an die harte Spoilerkomponente 18a angeformt. Das erste Kanalelement 24a ist vollständig an die harte Spoilerkomponente 18a angeformt. Die Sprüheinheit 22a weist eine Vielzahl von ersten Kanalelementen 24a auf. Die ersten Kanalelemente 24a sind entlang der Haupterstreckungsrichtung 48a der Wischblattvorrichtung 10a angeordnet. Die ersten Kanalelemente 24a sind entlang der Haupterstreckungsrichtung 48a der Wischblattvorrichtung 10a äquidistant zueinander angeordnet. Das erste Kanalelement 24a ist als eine röhrenförmige Ausnehmung ausgebildet. Das erste Kanalelement 24a ist als eine röhrenförmige Ausnehmung innerhalb der harten Spoilerkomponente 18a ausgebildet. Das erste Kanalelement 24a ist zu einer Ausgabe und/oder Führung eines Reinigungsfluids vorgesehen. Das Reinigungsfluid ist als ein Wischwasser ausgebildet. Das erste Kanalelement 24a ist teilweise als ein Sprühdüsenelement 26a der Sprüheinheit 22a ausgebildet. Das erste Kanalelement 24a ist an einer Ausgabeöffnung des ersten Kanalelements 24a als ein Sprühdüsenelement 26a ausgebildet. Die Ausgabe des Reinigungsfluids durch das Sprühdüsenelement 26a erfolgt unter einem Überdruck. Der Überdruck ist höher als ein Umgebungsdruck einer die Wischblattvorrichtung 10a umgebenden Umgebung.

Das erste Kanalelement 24a weist eine Haupterstreckungsrichtung im Wesentlichen parallel zu der Vertikalerstreckungsrichtung 28a der Spoilereinheit 14a auf. Die Haupterstreckungsrichtung des ersten Kanalelements 24a verläuft in einem an einer Kraftfahrzeugscheibe montierten Zustand des Scheibenwischers 12a im Wesentlichen senkrecht zu einer Oberfläche der Kraftfahrzeugscheibe. Das erste Kanalelement 24a ist in der Vertikalerstreckungsrichtung 28a der Spoilereinheit 14a überlappend zu dem Aufnahmebereich 20a der Federschiene angeordnet. Das erste Kanalelement 24a ist in der Vertikalerstreckungsrichtung 28a der Spoilereinheit 14a vollständig überlappend zu dem Aufnahmebereich 20a der Federschiene angeordnet. Alternativ ist vorstellbar, dass das erste Kanalelement 24a in der Vertikalerstreckungsrichtung 28a der Spoilereinheit 14a teilweise überlappend zu dem Aufnahmebereich 20a der Federschiene angeordnet ist. Die Haupterstreckungsrichtung des ersten Kanalelements 24a verläuft im Wesentlichen parallel zu einer Vertikalerstreckungsrichtung des Aufnahmebereichs 20a. Die Vertikalerstreckungsrichtung des Aufnahmebereichs 20a verläuft im Wesentlichen parallel zu der Vertikalerstreckungsrichtung 28a der Spoilereinheit 14a.

Das erste Kanalelement 24a ist in einer Quererstreckungsrichtung 30a der Spoilereinheit 14a zu dem Aufnahmebereich 20a der Federschiene versetzt angeordnet. Das erste Kanalelement 24a ist in der Quererstreckungsrichtung 30a der Spoilereinheit 14a zu dem Aufnahmebereich 20a der Federschiene vollständig versetzt angeordnet. Alternativ ist denkbar, dass das erste Kanalelement 24a in der Quererstreckungsrichtung 30a der Spoilereinheit 14a zu dem Aufnahmebereich 20a der Federschiene teilweise versetzt angeordnet ist. Das erste Kanalelement 24a ist in der Quererstreckungsrichtung 30a der Spoilereinheit 14a vollständig durch die harte Spoilerkomponente 18a von dem Aufnahmebereich 20a getrennt.

Die weiche Spoilerkomponente 16a bildet einen Kanal 32a der Sprüheinheit 22a aus. Die weiche Spoilerkomponente 16a bildet den Kanal 32a der Sprüheinheit 22a vollständig aus. Alternativ ist denkbar, dass die weiche Spoilerkomponente 16a den Kanal 32a der Sprüheinheit 22a teilweise ausbildet. Der Kanal 32a ist direkt mit dem ersten Kanalelement 24a verbunden. Der Kanal 32a verläuft im Wesentlichen parallel zu der Haupterstreckungsrichtung 48a der Wischblattvorrichtung 10a. Der Kanal 32a erstreckt sich im Wesentlichen entlang einer Gesamterstreckung der Spoilereinheit 14a entlang der Haupterstreckungsrichtung 48a der Wischblattvorrichtung 10a. Der Kanal 32a ist als eine Ausnehmung in der weichen Spoilerkomponente 16a ausgebildet. Der Kanal 32a ist als eine schlauchförmige Ausnehmung in der weichen Spoilerkomponente 16a ausgebildet. Der Kanal 32a ist zu einer Durchleitung des Reinigungsfluids vorgesehen. Das Reinigungsfluid kann durch den Kanal 32a befördert werden. Das Reinigungsfluid wird dem Kanal 32a durch ein nicht weiter dargestelltes Zuleitungselement zugeleitet. Der Kanal 32a ist entlang der Vertikalerstreckungsrichtung 28a der Spoilereinheit 14a betrachtet oberhalb des ersten Kanalelements 24a angeordnet. Das unter einem im Vergleich zu einem Umgebungsdruck der die Wischblattvorrichtung 10a umgebenden Umgebung unter einem Überdruck stehende Reinigungsfluid wird aus dem Kanal 32a in das erste Kanalelement 24a gedrückt und durch das erste Kanalelement 24a ausgegeben. Die mehreren ersten Kanalelemente 24a sind im Wesentlichen entlang des kompletten Kanals 32a äquidistant zueinander angeordnet.

Das erste Kanalelement 24a ist von einer Wandung 34a des Aufnahmebereichs 20a der Federschiene begrenzt. Die Wandung 34a begrenzt auf einer dem Sprühdüsenelement 26a abgewandten Seite 36a der Wandung 34a den Aufnahmebereich 20a teilweise. Die Wandung 34a begrenzt auf der dem Sprühdüsenelement 26a abgewandten Seite 36a der Wandung 34a den Aufnahmebereich 20a entlang der Quererstreckungsrichtung 30a der Spoilereinheit 14a.

Die Sprüheinheit 22a weist ein zweites Kanalelement 38a auf. Das zweite Kanalelement 38a ist auf einer dem ersten Kanalelement 24a abgewandten Seite 40a des Aufnahmebereichs 20a angeordnet. Die Sprüheinheit 22a weist eine Vielzahl von zweiten Kanalelementen 38a auf. Die zweiten Kanalelemente 38a sind entlang der kompletten Haupterstreckungsrichtung 48a der Wischblattvorrichtung 10a angeordnet. Die zweiten Kanalelemente 38a sind entlang der Haupterstreckungsrichtung 48a der Wischblattvorrichtung 10a äquidistant zueinander angeordnet. Das zweite Kanalelement 38a ist im Wesentlichen analog zu dem ersten Kanalelement 24a ausgebildet. Das zweite Kanalelement 38a ist zu einer Ausgabe des Reinigungsfluids vorgesehen. Die Sprüheinheit 22a umfasst einen zweiten Kanal 50a. Der zweite Kanal 50a ist auf der dem ersten Kanalelement 24a abgewandten Seite 40a des Aufnahmebereichs 20a angeordnet. Der zweite Kanal 50a ist im Wesentlichen analog zu dem mit dem ersten Kanalelement 24a verbundenen Kanal 32a ausgebildet. Der zweite Kanal 50a ist direkt mit dem zweiten Kanalelement 38a verbunden. Der zweite Kanal 50a ist zu einer Durchleitung des Reinigungsfluids vorgesehen. Das zweite Kanalelement 38a und der zweite Kanal 50a sind im Wesentlichen spiegelsymmetrisch zu dem ersten Kanalelement 24a und dem mit dem ersten Kanalelement 24a verbundenen Kanal 32a um den Aufnahmebereich 20a herum angeordnet.

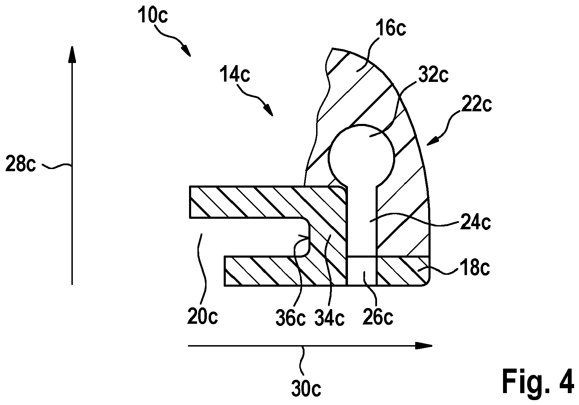

In den Figuren 3 und 4 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 und 4 ist der Buchstabe a durch die Buchstaben b und c ersetzt.

Figur 3 zeigt einen Teil einer alternativen Wischblattvorrichtung 10b in einer schematischen Schnittdarstellung. Die Wischblattvorrichtung 10b umfasst eine Spoilereinheit 14b. Die Spoilereinheit 14b weist eine weiche Spoilerkomponente 16b und eine harte Spoilerkomponente 18b auf. Die harte Spoilerkomponente 18b bildet teilweise einen Aufnahmebereich 20b für eine Federschiene aus. Die Wischblattvorrichtung 10b umfasst eine Sprüheinheit 22b. Die Sprüheinheit 22b weist ein erstes Kanalelement 24b auf. Das erste Kanalelement 24b ist teilweise an die harte Spoilerkomponente 18b angeformt. Das erste Kanalelement 24b ist teilweise an die weiche Spoilerkomponente 16b angeformt. Das teilweise angeformte erste Kanalelement 24b bildet teilweise ein Sprühdüsenelement 26b der Sprüheinheit 22b aus. Das erste Kanalelement 24b bildet in einem Abschnitt des ersten Kanalelements 24b, in dem das erste Kanalelement 24b an die harte Spoilerkomponente 18b angeformt ist, ein Sprühdüsenelement 26b der Sprüheinheit 22b aus. Das erste Kanalelement 24b ist in einer Quererstreckungsrichtung 30b der Spoilereinheit 14b zu dem Aufnahmebereich 20b der Federschiene versetzt angeordnet. Das erste Kanalelement 24b ist in der Quererstreckungsrichtung 30b der Spoilereinheit 14b teilweise durch die weiche Spoilerkomponente 16b von dem Aufnahmebereich 20b getrennt. Das erste Kanalelement 24b ist in der Quererstreckungsrichtung 30b der Spoilereinheit 14b teilweise durch die harte Spoilerkomponente 18b von dem Aufnahmebereich 20b getrennt.

Die Sprüheinheit 22b weist ein zweites Kanalelement 38b auf. Das zweite Kanalelement 38b ist im Wesentlichen analog zu dem ersten Kanalelement 24b ausgebildet. Das zweite Kanalelement 38b ist auf einer dem ersten Kanalelement 24b abgewandten Seite 40b des Aufnahmebereichs 20b angeordnet. Die Sprüheinheit 22b weist einen zweiten Kanal 50b auf. Der zweite Kanal 50b ist im Wesentlichen analog zu dem mit dem ersten Kanalelement 24b verbundenen Kanal 32b ausgebildet. Der zweite Kanal 50b ist auf der dem ersten Kanalelement 24b abgewandten Seite 40b des Aufnahmebereichs 20b angeordnet. Die dem ersten Kanalelement 24b abgewandte Seite 40b des Aufnahmebereichs 20b ist nicht weiter dargestellt.

Figur 4 zeigt einen Teil einer weiteren alternativen Wischblattvorrichtung 10c in einer schematischen Schnittdarstellung. Die Wischblattvorrichtung 10c umfasst eine Spoilereinheit 14c. Die Spoilereinheit 14c weist eine weiche Spoilerkomponente 16c und eine harte Spoilerkomponente 18c auf. Die harte Spoilerkomponente 18c bildet teilweise einen Aufnahmebereich 20c für eine Federschiene aus. Die Wischblattvorrichtung 10c umfasst eine Sprüheinheit 22c. Die Sprüheinheit 22c weist ein erstes Kanalelement 24c auf. Das erste Kanalelement 24c ist teilweise an die harte Spoilerkomponente 18c angeformt. Das erste Kanalelement 24c ist abschnittsweise halbumfänglich an die harte Spoilerkomponente 18c angeformt. Das erste Kanalelement 24c ist teilweise an die weiche Spoilerkomponente 16c angeformt. Das teilweise angeformte erste Kanalelement 24c bildet teilweise ein Sprühdüsenelement 26c der Sprüheinheit 22c aus. Das erste Kanalelement 24c bildet in einem Abschnitt des ersten Kanalelements 24c, in dem das erste Kanalelement 24c vollständig an die harte Spoilerkomponente 18c angeformt ist, ein Sprühdüsenelement 26c der Sprüheinheit 22c aus. Das erste Kanalelement 24c ist von einer Wandung 34c des Aufnahmebereichs 20c der Federschiene begrenzt. Die Wandung 34c begrenzt auf einer dem Sprühdüsenelement 26c abgewandten Seite 36c der Wandung 34c den Aufnahmebereich 20c teilweise. Die Wandung 34c begrenzt auf der dem Sprühdüsenelement 26c abgewandten Seite 36c der Wandung 34c den Aufnahmebereich 20c entlang der Quererstreckungsrichtung 30c der Spoilereinheit 14c.

Die Sprüheinheit 22c weist ein zweites Kanalelement 38c auf. Das zweite Kanalelement 38c ist im Wesentlichen analog zu dem ersten Kanalelement 24c ausgebildet. Das zweite Kanalelement 38c ist auf einer dem ersten Kanalelement 24c abgewandten Seite 40c des Aufnahmebereichs 20c angeordnet. Die Sprüheinheit 22c weist einen zweiten Kanal 50c auf. Der zweite Kanal 50c ist im Wesentlichen analog zu dem mit dem ersten Kanalelement 24c verbundenen Kanal 32c ausgebildet. Der zweite Kanal 50c ist auf der dem ersten Kanalelement 24c abgewandten Seite 40c des Aufnahmebereichs 20c angeordnet. Die dem ersten Kanalelement 24c abgewandte Seite 40c des Aufnahmebereichs 20c ist nicht weiter dargestellt.

## Patentansprüche

1. Wischblattvorrichtung für einen Scheibenwischer (12a) mit einer Spoilereinheit (14a; 14b; 14c), die zumindest eine weiche Spoilerkomponente (16a; 16b; 16c) und zumindest eine harte Spoilerkomponente (18a; 18b; 18c) aufweist, wobei die harte Spoilerkomponente (16a; 16b; 16c) einen Aufnahmebereich (20a; 20b; 20c) für eine Federschiene zumindest teilweise ausbildet, und mit einer Sprüheinheit (22a; 22b; 22c), **wobei** die Sprüheinheit (22a; 22b; 22c) zumindest ein zumindest teilweise an die harte Spoilerkomponente (18a; 18b; 18c) angeformtes erstes Kanalelement (24a; 24b; 24c) aufweist, **dadurch gekennzeichnet, dass** das erste Kanalelement (24a; 24b; 24c) eine Haupterstreckungsrichtung zumindest im Wesentlichen parallel zu einer Vertikalerstreckungsrichtung (28a; 28b; 28c) der Spoilereinheit (14a; 14b; 14c) aufweist.

2. Wischblattvorrichtung nach Anspruch 1, **dadurch gekennzeichnet, dass** das zumindest teilweise angeformte erste Kanalelement (24a; 24b; 24c) zumindest teilweise ein Sprühdüsenelement (26a; 26b; 26c) der Sprüheinheit (22a; 22b; 22c) ausbildet.

3. Wischblattvorrichtung nach einem der vorhergehenden Ansprüche, **dadurch gekennzeichnet, dass** das erste Kanalelement (24a; 24b; 24c) in einer Vertikalerstreckungsrichtung (28a; 28b; 28c) der Spoilereinheit (14a; 14b; 14c) zumindest teilweise überlappend zu dem Aufnahmebereich (20a; 20b; 20c) der Federschiene angeordnet ist.

4. Wischblattvorrichtung nach einem der vorhergehenden Ansprüche, **dadurch gekennzeichnet, dass** das erste Kanalelement (24a; 24b; 24c) in einer Quererstreckungsrichtung (30a; 30b; 30c) der Spoilereinheit (14a; 14b; 14c) zu dem Aufnahmebereich (20a; 20b; 20c) der Federschiene zumindest teilweise versetzt angeordnet ist.

5. Wischblattvorrichtung nach einem der vorhergehenden Ansprüche, **dadurch gekennzeichnet, dass** die weiche Spoilerkomponente (16a; 16b; 16c) zumindest einen Kanal (32a; 32b; 32c) der Sprüheinheit (22a; 22b; 22c) zumindest teilweise ausbildet, der direkt mit dem ersten Kanalelement (24a; 24b; 24c) verbunden ist.

6. Wischblattvorrichtung nach einem der vorhergehenden Ansprüche, **dadurch gekennzeichnet, dass** das erste Kanalelement (24a; 24c) von einer Wandung (34a; 34c) des Aufnahmebereichs (20a; 20c) der Federschiene begrenzt ist, wobei die Wandung (34a; 34c) auf einer dem Sprühdüsenelement (26a; 26c) abgewandten Seite (36a; 36c) der Wandung (34a; 34c) den Aufnahmebereich (20a; 20c) zumindest teilweise begrenzt.

7. Wischblattvorrichtung nach einem der Ansprüche 1 bis 5, **dadurch gekennzeichnet, dass** die Sprüheinheit (22a; 22b; 22c) zumindest ein zweites Kanalelement (38a; 38b; 38c) aufweist, welches auf einer dem ersten Kanalelement (24a; 24b; 24c) abgewandten Seite (40a; 40b; 40c) des Aufnahmebereichs (20a; 20b; 20c) angeordnet ist.

8. Wischblatt mit einer Wischblattvorrichtung (10a; 10b; 10c) nach einem der vorhergehenden Ansprüche.

9. Scheibenwischer (12a) mit einem Wischblatt (42a) nach Anspruch 8.

## Claims

1. Wiper-blade device for a window wiper (12a), having a spoiler unit (14a; 14b; 14c) which has at least one soft spoiler component (16a; 16b; 16c) and has at least one hard spoiler component (18a; 18b; 18c), wherein the hard spoiler component (16a; 16b; 16c) at least partially forms a receiving region (20a; 20b; 20c) for a spring rail, and having a spray unit (22a; 22b; 22c), **wherein** the spray unit (22a; 22b; 22c) has at least one first channel element (24a; 24b; 24c) which is at least partially integrally formed on the hard spoiler component (18a; 18b; 18c), **characterized in that** the first channel element (24a; 24b; 24c) has a main extent direction at least substantially parallel to a vertical extent direction (28a; 28b; 28c) of the spoiler unit (14a; 14b; 14c).

2. Wiper-blade device according to Claim 1, **characterized in that** the at least partially integrally formed first channel element (24a; 24b; 24c) at least partially forms a spray-nozzle element (26a; 26b; 26c) of the spray unit (22a; 22b; 22c).

3. Wiper-blade device according to either of the preceding claims, **characterized in that** the first channel element (24a; 24b; 24c), in a vertical extent direction (28a; 28b; 28c) of the spoiler unit (14a; 14b; 14c), is arranged so as to at least partially overlap the receiving region (20a; 20b; 20c) of the spring rail.

4. Wiper-blade device according to one of the preceding claims, **characterized in that** the first channel element (24a; 24b; 24c), in a transverse extent direction (30a; 30b; 30c) of the spoiler unit (14a; 14b; 14c), is arranged so as to be at least partially offset from the receiving region (20a; 20b; 20c) of the spring rail.

5. Wiper-blade device according to one of the preceding claims, **characterized in that** the soft spoiler component (16a; 16b; 16c) at least partially forms at least one channel (32a; 32b; 32c) of the spray unit (22a; 22b; 22c), which channel is directly connected to the first channel element (24a; 24b; 24c) .

6. Wiper-blade device according to one of the preceding claims, **characterized in that** the first channel element (24a; 24c) is delimited by a wall (34a; 34c) of the receiving region (20a; 20c) of the spring rail, wherein the wall (34a; 34c) at least partially delimits the receiving region (20a; 20c) on a side (36a; 36c) of the wall (34a; 34c) that faces away from the spray-nozzle element (26a; 26c).

7. Wiper-blade device according to one of Claims 1 to 5, **characterized in that** the spray unit (22a; 22b; 22c) has at least one second channel element (38a; 38b; 38c) which is arranged on a side (40a; 40b; 40c) of the receiving region (20a; 20b; 20c) that faces away from the first channel element (24a; 24b; 24c) .

8. Wiper blade having a wiper-blade device (10a; 10b; 10c) according to one of the preceding claims.

9. Window wiper (12a) having a wiper blade (42a) according to Claim 8.

## Revendications

1. Dispositif de balai d'essuie-glace pour un essuie-glace (12a) avec une unité de déflecteur (14a ; 14b ; 14c) qui comprend au moins un composant de déflecteur souple (16a ; 16b ; 16c) et au moins un composant de déflecteur dur (18a ; 18b ; 18c), le composant de déflecteur dur (16a ; 16b ; 16c) réalisant au moins partiellement une zone de réception (20a ; 20b ; 20c) pour une barre à ressort, et avec une unité de pulvérisation (22a ; 22b ; 22c), l'unité de pulvérisation (22a ; 22b ; 22c) présentant au moins un premier élément de canal (24a ; 24b ; 24c) formé au moins partiellement sur le composant de déflecteur dur (18a ; 18b ; 18c), **caractérisé en ce que** le premier élément de canal (24a ; 24b ; 24c) présente une direction d'extension principale au moins essentiellement parallèle à une direction d'extension verticale (28a ; 28b ; 28c) de l'unité de déflecteur (14a ; 14b ; 14c).

2. Dispositif de balai d'essuie-glace selon la revendication 1, **caractérisé en ce que** le premier élément de canal (24a ; 24b ; 24c) au moins partiellement formé réalise au moins partiellement un élément de buse de pulvérisation (26a ; 26b ; 26c) de l'unité de pulvérisation (22a ; 22b ; 22c).

3. Dispositif de balai d'essuie-glace selon l'une quelconque des revendications précédentes, **caractérisé en ce que** le premier élément de canal (24a ; 24b ; 24c) est agencé dans une direction d'extension verticale (28a ; 28b ; 28c) de l'unité de déflecteur (14a ; 14b ; 14c) au moins partiellement en chevauchement avec la zone de réception (20a ; 20b ; 20c) de la barre à ressort.

4. Dispositif de balai d'essuie-glace selon l'une quelconque des revendications précédentes, **caractérisé en ce que** le premier élément de canal (24a ; 24b ; 24c) est agencé dans une direction d'extension transversale (30a ; 30b ; 30c) de l'unité de déflecteur (14a ; 14b ; 14c) au moins partiellement en décalage par rapport à la zone de réception (20a ; 20b ; 20c) de la barre à ressort.

5. Dispositif de balai d'essuie-glace selon l'une quelconque des revendications précédentes, **caractérisé en ce que** le composant de déflecteur souple (16a ; 16b ; 16c) réalise au moins partiellement au moins un canal (32a ; 32b ; 32c) de l'unité de pulvérisation (22a ; 22b ; 22c) qui est directement relié au premier élément de canal (24a ; 24b ; 24c).

6. Dispositif de balai d'essuie-glace selon l'une quelconque des revendications précédentes, **caractérisé en ce que** le premier élément de canal (24a ; 24c) est délimité par une paroi (34a ; 34c) de la zone de réception (20a ; 20c) de la barre à ressort, la paroi (34a ; 34c) délimitant au moins partiellement la zone de réception (20a ; 20c) sur un côté (36a ; 36c) de la paroi (34a ; 34c) détourné de l'élément de buse de pulvérisation (26a ; 26c).

7. Dispositif de balai d'essuie-glace selon l'une quelconque des revendications 1 à 5, **caractérisé en ce que** l'unité de pulvérisation (22a ; 22b ; 22c) présente au moins un deuxième élément de canal (38a ; 38b ; 38c), qui est agencé sur un côté (40a ; 40b ; 40c) de la zone de réception (20a ; 20b ; 20c) détourné du premier élément de canal (24a ; 24b ; 24c).

8. Balai d'essuie-glace avec un dispositif de balai d'essuie-glace (10a ; 10b ; 10c) selon l'une quelconque des revendications précédentes.

9. Essuie-glace (12a) avec un balai d'essuie-glace (42a) selon la revendication 8.
